# EUROPÄISCHE PATENTSCHRIFT

(11) **EP 3 688 513 B1**
(45) Veröffentlichungstag und Bekanntmachung des Hinweises auf die Patenterteilung: **08.04.2026**
(21) Anmeldenummer: 18769309.8
(22) Anmeldetag: 05.09.2018
(51) Int. Cl.: G02B 27/01, G02B 27/00

(54) **HEAD-UP-DISPLAY**
HEAD-UP DISPLAY
AFFICHAGE TÊTE HAUTE

(30) Priorität: 25.09.2017 DE 102017216897; 26.10.2017 DE 102017219181
(43) Veröffentlichungstag der Anmeldung: 05.08.2020
(73) Patentinhaber: AUMOVIO Germany GmbH, 60488 Frankfurt am Main (DE)
(72) Erfinder: STAMM, Martin, 65824 Schwalbach a. Ts. (DE); KABATEK, Ulrich, 64832 Babenhausen (DE)
(74) Vertreter: Aumovio Corporation
(86) Internationale Anmeldenummer: PCT/EP2018/073879
(87) Internationale Veröffentlichungsnummer: WO 2019/057496

(56) Entgegenhaltungen:
- WO-A1-2018/179724
- DE-A1- 102009 045 169
- DE-A1- 102009 045 169
- DE-A1- 102014 006 728
- DE-A1- 102014 006 728
- DE-A1- 102015 109 027
- DE-A1- 102015 109 027
- DE-A1- 102016 000 412
- DE-A1- 102016 000 412
- DE-A1- 102017 201 502
- JP-A- 2013 237 320
- US-A1- 2017 045 736
- US-A1- 2017 045 736

## Beschreibung

Die vorliegende Erfindung betrifft ein Head-Up-Display mit Bildverzerrung für ein Fahrzeug. Dabei werden Informationen für einen Betrachter, beispielsweise den Fahrzeugführer oder einen anderen Insassen des Fahrzeugs, über die Windschutzscheibe gespiegelt in dessen Auge geleitet. Zur Anpassung an unebene Projektionsflächen, wie die Windschutzscheibe eine darstellt, kommt üblicherweise eine Bildverzerrung, das sogenannte Warping, zum Einsatz.

Head-Up-Displays aggregieren Informationen und machen diese dem Fahrer über eine optische Spiegelung in der Windschutzscheibe zugänglich. Sie ermöglichen eine gute Ablesbarkeit bei minimaler Ablenkung vom Verkehrsgeschehen. Bislang war die Auflösung und Position der Informationen in den Head-Up-Displays beschränkt auf einen kleinen Sichtbereich des Fahrers. Mittlerweile gibt es Projektionstechniken, die eine deutlich größere Fläche im Sichtfeld des Fahrers abdecken können und damit eine sinnvolle Überlagerung von virtuell generierten Informationen mit dem realen Bild zulassen. Bei dieser Art der virtuellen Realität, auch Augmented Reality genannt, sind die Anforderungen an minimale Latenzen bei der Bildgenerierung für die virtuellen Informationen extrem hoch, da das reale Bild durch die Windschutzscheibe latenzfrei wahrgenommen wird. Für einen qualitativ hochwertigen optischen Eindruck von Head-Up-Displays mit Augmented Reality ist unter anderem der Ausgleich der Nickbewegung des Fahrzeugs von extremer Bedeutung. Hier kommt es auf eine Regelung mit hoher Abtastzeit und möglichst geringen Totzeiten an.

In der DE 10 2015 109 027 A1 wird vorgeschlagen, einen beweglichen Reflektor vorzusehen, durch dessen Bewegung die Position des dargestellten virtuellen Bildes verändert wird, um reales Bild und virtuelles Bild möglichst nicht gegeneinander zu verschieben. Um die an der veränderten Position herrschende Krümmung des Spiegelelements, der Windschutzscheibe, zu berücksichtigen, wird eine auf diese veränderte Position passende Modifikation des abgestrahlten Bildsignals vorgenommen. Als nachteilig daran ist anzusehen, daß die Bewegung des Spiegels mit einer gewissen Latenz erfolgt und auch die Modifikation des Bildsignals einen gewissen Zeit- und Rechenaufwand erfordert. Auf kurzfristig auftretende Veränderungen kann daher nicht oder nur mit Zeitverzug reagiert werden. Reales und virtuelles Bild sind in diesen Fällen nicht in Einklang, was zu Irritationen beim Nutzer führen kann und somit die Fahrsicherheit beeinträchtigt. Ein demgegenüber verbessertes Head-Up-Display ist somit erstrebenswert.

Weiterer Stand der Technik ist aus der JP 2013 237320 A bekannt.

Ein Aspekt der Erfindung betrifft ein Head-Up-Display nach Anspruch 1. Bei dem erfindungsgemäßen Head-Up-Display ist neben zumindest einem Sensor, einem Bildgenerator, einer Anzeigeeinheit und einer Spiegeleinheit erfindungsgemäß eine Korrektureinheit vorhanden.

Vorzugsweise ist sie zwischen Bildgenerator und Anzeigeeinheit angeordnet. Die Korrektureinheit dient zum Korrigieren der Position des anzuzeigenden virtuellen Bildes, insbesondere bei plötzlich auftretenden Ereignissen, wie Bodenwellen oder plötzlichem Bremsen und damit einhergehender Nickbewegung des Fahrzeugs nach vorne. Die Korrektureinheit verhindert, daß sich insbesondere die Anzeige zur Augmented Reality zu weit gegenüber dem realen Bild verschiebt. Auch seitliche und kombinierte Verschiebungen sind hier mit vorgesehen. Die erfindungsgemäße Lösung hat den Vorteil schnell auf kurzfristige Änderungen des Fahrzeugzustandes reagieren zu können. Eine solche Änderung ist beispielsweise eine Nickbewegung aufgrund einer starken Verzögerung des Fahrzeugs. Auch eine seitliche Bewegung aufgrund eines plötzlichen Lenkeinschlags ist ein Beispiel für eine solche Änderung. Erfindungsgemäß wird in Kauf genommen, daß die durch die Korrektureinheit hervorgerufene Korrektur der Position des anzuzeigenden virtuellen Bildes nicht mit einer vollständig auf diese veränderte Position passende Modifikation des abgestrahlten Bildsignals einhergeht. Aufgrund der an dieser Position etwas anderen Krümmung der Windschutzscheibe, des Spiegelelements, erscheint das verschobene virtuelle Bild etwas verzerrt. Diese unpassende Verzerrung ist für eine kurze Zeit akzeptabel und fällt dem Nutzer im allgemeinen weniger störend auf als eine Verschiebung zwischen realem Bild und virtuellem Bild. Das erfindungsgemäße Head-Up-Display weist also eine latenzarme Offsetregelung auf. Als Sensor ist beispielsweise ein Gyroskop vorgesehen.

Der Bildgenerator weist eine Elektronik zum Erzeugen des anzuzeigenden virtuellen Bildes auf. Dort werden beispielsweise die aktuelle Geschwindigkeit des Fahrzeugs, Navigationshinweise, Warnhinweise oder Augmented Reality angezeigt. Unter Augmented Reality versteht man die Überlagerung des realen Bildes mit Zusatzinformationen. Die Spiegeleinheit ist im allgemeinen die Windschutzscheibe des Fahrzeugs oder ein zwischen Windschutzscheibe und Fahrer bzw. Nutzer angeordnetes Element das im allgemeinen als Combiner bezeichnet wird. Zwischen Anzeigeeinheit und Spiegeleinheit sind im allgemeinen ein oder mehrere Spiegel und/oder ein oder mehrere weitere optische Elemente, beispielsweise eine Linse, angeordnet. Einer dieser Spiegel ist vorzugsweise beweglich angeordnet um eine Verschiebung des virtuellen Bildes erzeugen zu können. Einer dieser Spiegel weist vorzugsweise eine gekrümmte Oberfläche auf, mit der eine Vergrößerung des virtuellen Bildes erzielt wird. Sie kann auch zur zumindest teilweisen Kompensation einer Krümmung der Spiegeleinheit dienen, sodaß bei einer Verschiebung des virtuellen Bildes nur eine geringfügige Anpassung einer Vorverzerrung des anzuzeigenden Bildes erforderlich ist.

Erfindungsgemäß ist vorgesehen, daß der zumindest eine Sensor ein Sensor mit geringer Latenz ist. Dies hat den Vorteil einer besonders schnellen Detektion von zu korrigierenden Bewegungen, ohne auf stärker zeitverzögerte Signale von Sensoren größerer Latenz warten zu müssen.

Erfindungsgemäß ist vorgesehen, daß der zumindest eine Sensor ein Gyroskop, auch Gyrosensor genannt, ist, der mit einem Eingang der Korrektureinheit verbunden ist. Dies hat den Vorteil einer besonders schnellen Detektion von Nickbewegungen oder seitlichen Bewegungen des Fahrzeugs, die beispielsweise durch ein abruptes Bremsmanöver, Bodenwellen oder einen schnellen Lenkeinschlag hervorgerufen werden.

Weist der Bildgenerator mehrere Elemente unterschiedlicher Latenzzeit auf, ist erfindungsgemäß vorgesehen, die Korrektureinheit dem Element höchster Latenzzeit nachzuordnen. Dies hat den Vorteil, daß die Korrektureinheit kein separates Element, sondern in den Bildgenerator integriert ist. Sie ist dabei so anzuordnen, daß das mit Offset beaufschlagte Signal keine allzugroßen Zeitverzögerung in den nachfolgenden Elementen erfährt.

Vorteilhafterweise ist ein Hochpaßfilter für das Signal des zumindest einen Sensors vorhanden. Dies hat den Vorteil, daß nur schnelle Änderungen berücksichtigt werden, für die die eigentliche Regelung aufgrund der vielen durchzuführenden Rechenoperationen zu langsam ist. Langsame Änderungen, die beispielsweise bei sanftem Bremsen oder Beschleunigen oder bei nur geringfügigem Lenkeinschlag auftreten, werden mittels herkömmlicher Mittel kompensiert, beispielsweise durch Verstellen des verstellbaren Spiegels. Dabei wird die Vorverzerrung des anzuzeigenden Bildes an die der jeweiligen Position entsprechende Krümmung der Windschutzscheibe angepaßt.

Ein weiterer Aspekt der Erfindung betrifft ein Verfahren gemäß Anspruch 4. Bei dem erfindungsgemäßen Verfahren zum Betreiben eines Head-Up-Displays wird zunächst der auf dem Head-Up-Display darzustellende Bildinhalt generiert. Dieser wird entsprechend den optischen Randbedingungen des Head-Up-Displays vorverzerrt. Aus dem vorverzerrten Bildsignal wird ein Anzeigesignal generiert. Eine schnelle Positionsveränderung des Durchstoßpunktes der Blickrichtung eines Nutzers mit einer Spiegeleinheit des Head-Up-Displays wird detektiert. Ein dieser Positionsveränderung entsprechender Offset wird dem Signal des Bildinhalts und/oder dem vorverzerrten Bildsignal und/oder dem Anzeigesignal beaufschlagt. In den beiden ersten Fällen wird das Anzeigesignal indirekt, in letzterem Fall direkt mit einem Offset beaufschlagt. Das mit dem Offset beaufschlagt Anzeigesignal wird dargestellt. Dieses Verfahren hat den Vorteil einer schnellen Reaktion auf kurzfristige Änderungen des Fahrzeugzustands, beispielsweise einer Nickbewegung aufgrund starken Bremsens oder einer seitlichen Bewegung aufgrund eines schnell erfolgenden Lenkeinschlags. Eine Positionsveränderung des Durchstoßpunktes der Blickrichtung eines Nutzers durch die gegebenenfalls gekrümmte Fläche der Spiegeleinheit tritt bei einer plötzlichen Nickbewegung des Fahrzeugs auf. Bei kräftigem Bremsen wandert der Durchstoßpunkt auf der Windschutzscheibe nach oben. Bei plötzlichem Lenkeinschlag tritt eine seitliche Beschleunigung auf, bei der sich der Durchstoßpunkt aufgrund der Trägheit des Kopfes des Fahrers im allgemeinen nach links oder rechts verschiebt. Eine Positionsveränderung des Durchstoßpunktes kann somit durch das Detektieren einer Nickbewegung oder einer seitlichen Bewegung detektiert werden. Eine andere Möglichkeit besteht darin, das Bild einer auf den Fahrer gerichteten Kamera auf Veränderung der Blickrichtung des Fahrers hin auszuwerten, oder das Bild einer nach außen gerichteten Kamera auf eine vertikale Verschiebung des Horizonts hin auszuwerten. Dies erfolgt mit heute verfügbaren Auswertealgorithmen etwas langsamer als das Detektieren einer Nickbewegung oder einer horizontalen Bewegung, sodaß letztere bevorzugte Varianten sind.

Erfindungsgemäß wird ein Niederfrequenzanteil der Positionsveränderung zum Vorverzerrung des Bildinhaltes genutzt, während ein höherer Frequenzanteil zum Bestimmen des Offsets genutzt wird. Dies hat den Vorteil, daß kein zusätzlicher Sensor zum Mitbeeinflussen der Vorverzerrung erforderlich ist.

Gemäß einer vorteilhaften Weiterbildung wird der Offset entsprechend einer Zeitkonstante reduziert. Die Zeitkonstante hängt dabei mit der Latenz des Bildgenerators zusammen. Vorteilhaft daran ist, daß falls eine Positionsveränderung des Durchstoßpunktes dauerhaft ist, die Kompensation dann über die genauere Berechnung erfolgt, ohne einen dauerhaften Offset zu erfordern.

Erfindungsgemäß ist vorgesehen, die schnelle Positionsänderung mittels eines Gyrosensor zu detektieren. Dies hat den bereits weiter oben genannten Vorteil.

Ebenfalls vorteilhaft ist es, die schnelle Positionsänderung mittels eines Augenbewegungssensors zu detektieren. Dies ist beispielsweise eine auf den Fahrer gerichtete Kamera mit entsprechenden Auswertealgorithmen. Vorteilhaft ist, daß in diesem Fall auch ein horizontaler Offset und eine Kombination von horizontalem und vertikalem Offset detektiert werden können, auch wenn die Positionsveränderung nicht aufgrund einer Bewegung des Fahrzeugs sondern aufgrund einer Veränderung der Blickrichtung des Fahrers hervorgerufen wird.

Eine vorteilhafte Weiterbildung besteht darin, daß die schnelle Positionsänderung mittels eines vom Augenbewegungssensor stammenden Signals gefiltert wird. Dabei wird beispielsweise ein schneller Blick zum Rückspiegel oder zum Außenspiegel als nichtrelevante Positionsveränderung herausgefiltert. Auch ein schneller Blick zum Autoradio, zu anderen Bedienelementen, zu Mitfahrern oder ähnliche Blicke, von denen der Nutzer üblicherweise zu der vorhergehenden Ausgangsposition zurückkehrt, werden herausgefiltert. Somit werden unnötige, weil nicht beobachtbare, Verschiebungen mittels Offset vermieden.

Ein erfindungsgemäßes Computerprogrammprodukt weist Softwarecodeabschnitte auf, mit denen ein erfindungsgemäßes Verfahren ausgeführt wird, wenn das Computerprogrammprodukt auf einem Computer läuft. Hierbei sind sowohl ein derzeit gebräuchlicher digitaler Computer als auch ein zukünftiger Quantencomputer oder andere, zukünftig die derzeitigen digitalen Computer ersetzende Vorrichtungen mit eingeschlossen.

Ein erfindungsgemäßes nichtflüchtiges Speichermedium weist Softwarecodeabschnitte auf, mit denen das erfindungsgemäße Verfahren ausgeführt wird, wenn diese Softwarecodeabschnitte auf einem Computer ausgeführt werden.

Es versteht sich, daß die vorteilhaften Ausführungsformen und Varianten sowohl einzeln, als auch in unterschiedlichen Kombinationen miteinander sinnvolle Ausgestaltungen der Erfindung darstellen. Auch geringfügige Modifikationen oder Variationen, die im Können des Fachmanns liegen, stellen sinnvolle Ausgestaltungen der Erfindung dar. Weitere Details, Varianten und Vorteile der Erfindung sind auch der nachfolgenden Beschreibung von Ausführungsbeispielen anhand der Abbildungen entnehmbar. Dabei zeigen:
Fig.1 Head-Up-Display
Fig.2 Variante eines Head-Up-Displays
Fig.3 Variante eines Head-Up-Displays
Fig.4-6 Sicht aus Blick des Fahrers in unterschiedlichen Situationen
Fig.7 Beispiel einer Bildverzerrung
Fig.8 Flußdiagramm eines erfindungsgemäßen Verfahrens

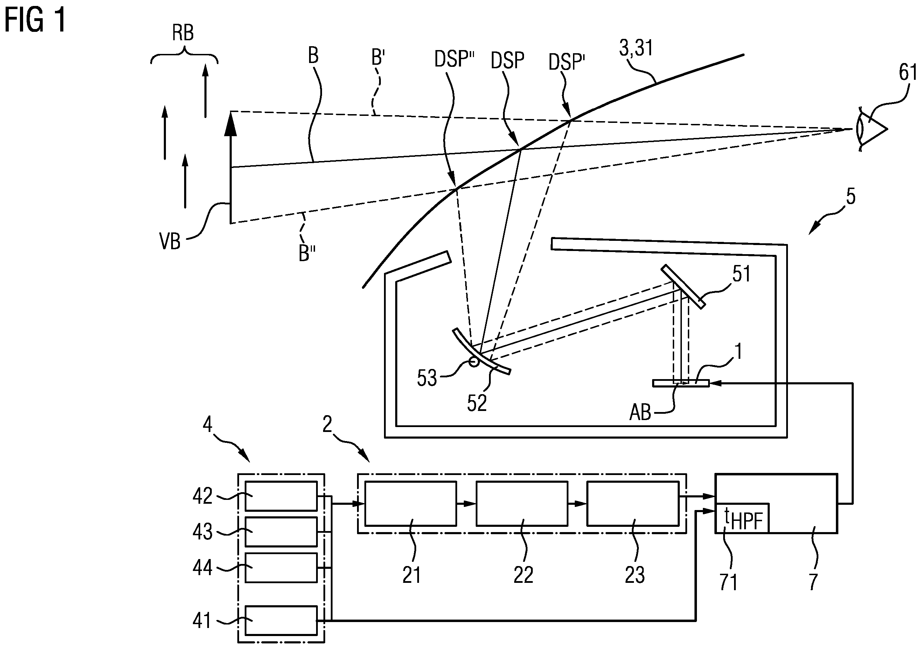

Fig.1 zeigt ein erfindungsgemäßes Head-Up-Display. Das Auge 61 eines Betrachters, beispielsweise des Fahrers eines Fahrzeugs oder eines anderen Nutzers, sieht ein virtuelles Bild VB durch eine Spiegeleinheit 3 hindurch, die hier als Windschutzscheibe 31 ausgelegt ist. Die ins Auge 61 des Betrachters fallenden Lichtstrahlen wurden an der Windschutzscheibe 31 reflektiert, auf die sie von einer Optikeinheit 5 her gelangen. Das virtuelle Bild VB erscheint dem Auge 61 des Betrachters der Realität, dem realen Bild RB, überlagert. Das reale Bild RB ist hier durch drei räumlich gestaffelte und in unterschiedlicher Höhe angeordnete Pfeile symbolisch dargestellt.

In der Optikeinheit 5 befindet sich eine Anzeigeeinheit 1, die hier als selbstleuchtendes flaches Display dargestellt ist, beispielsweise eine OLED-Anzeige. Auf der Anzeigeeinheit 1 ist ein anzuzeigendes Bild AB angedeutet. Von dort gelangt Licht auf einen ebenen Spiegel 51, von dem es auf einen beweglichen Spiegel 52 reflektiert wird. Dieser reflektiert es Richtung Windschutzscheibe 31, von wo aus es ins Auge 61 des Betrachters reflektiert wird. Der bewegliche Spiegel 52 ist hier um eine Drehachse 53 rotierbar dargestellt. Gemäß einer nicht dargestellten Variante ist zusätzlich eine Drehung um eine zur Drehachse 53 nichtparallele Drehachse vorgesehen.

Ein Bildgenerator 2 ist eingangsseitig mit einem Sensor 4 verbunden und ausgangsseitig mit einer Korrektureinheit 7. Im Sensor 4 sind mehrere unterschiedliche Sensortypen dargestellt, von denen zumindest einer im Sensor 4 vorhanden ist. Einer der Sensoren ist ein Gyrosensor 41, ein weiterer ist eine nach innen oder außen gerichtete Kamera 42, ein weiterer ist ein Radar 43. Weitere Sensoren 44 sind hier nicht im Detail angegeben. Ausgangssignale der Sensoren 41-44 werden dem Bildgenerator 2 zugeführt.

Der Bildgenerator 2 weist eine Datenverarbeitungseinheit 21 auf, in der eine komplexe Datenverarbeitung erfolgt, die eine relativ hohe Latenz aufweist. Dazu zählt unter anderem die Bilderkennung in einem von einer Kamera 42 aufgenommenen realen Bild der Umgebung, um erkannten Bildelementen passende Zusatzdaten für die Augmented Reality zuordnen zu können. Auch das Sammeln und Aufbereiten weiterer anzuzeigender Informationen ist Teil der von der Datenverarbeitungseinheit 21 ausgeführten Datenverarbeitung. Die verarbeiteten Daten werden einer Zeicheneinheit 22 zugeführt, die das darzustellende Bild zeichnet. Dieses wird einem Bildverzerrer 23 zugeführt, der eine Vorverzerrung entsprechend der Wölbung der Windschutzscheibe 31 sowie entsprechend weiterer im optischen Pfad zwischen Anzeigeeinheit 1 und Auge 61 auftretender, eine Verzerrung hervorrufender optischer Randbedingungen durchführt. Das vorverzerrt Bildsignal wird der Korrektureinheit 7 zugeführt. Diese hat als weiteres Eingangssignal das Ausgangssignal des Gyrosensors 41. Deutet das Signal des Gyrosensors 41 auf eine durch Bremsen verursachte Nickbewegung hin, so wird dem vorverzerrt Bildsignal ein Offset aufgeprägt. Dies führt dazu, daß das darzustellende Bild auf der Windschutzscheibe 31 weiter nach oben wandert, und somit das virtuelle Bild VB weiterhin passend zum realen Bild RB in das Auge 61 des Betrachters fällt. In der Korrektureinheit 7 ist ein Hochpaßfilter 71 angeordnet, dem das Signal des Gyrosensors 41 zugeführt wird. Somit wird ein Offset nur dann erzeugt, wenn eine abrupte Änderung auftritt. Die Zeitkonstante t_{IIPF} des Hochpaßfilters 71 ist entsprechend gewählt.

Weist der Bildverzerrer 23 eine geringe Latenz auf, so ist gemäß einer hier nicht dargestellten Variante vorgesehen, die Korrektureinheit 7 zwischen Zeicheneinheit 22 und Bildverzerrer 23 anzuordnen. Weist die Zeicheneinheit 22 eine geringe Latenz auf, so ist gemäß einer ebenfalls hier nicht dargestellten Variante vorgesehen, die Korrektureinheit 7 zwischen Datenverarbeitungseinheit 21 und Zeicheneinheit 22 anzuordnen. Gemäß weiterer Varianten ist die Korrektureinheit 7 in die Zeicheneinheit 22 und/oder den Bildverzerrer 23 integriert. Eine weitere Variante besteht darin, daß die Korrektureinheit 7 die Anzeigeeinheit 1 und/oder den beweglichen Spiegel 52 ansteuert, um das darzustellende Bild auf der Windsschutzscheibe 31 entsprechend zu verschieben. Auch eine Korrektur an mehreren oder allen der genannten Stellen gleichzeitig, gegebenenfalls in unterschiedlichem Maß, stellt eine erfindungsgemäße Variante dar. Ist der weitere Sensor 44 ein Sensor geringer Latenz, so dient dieser gemäß Varianten der Erfindung anstatt des Gyrosensors 41 oder zusätzlich zu diesem als Eingangssignal der Korrektureinheit 7.

Die Blickrichtung B des Betrachters, der auch als Nutzer oder Fahrer bezeichnet wird, ist als die durchgezogene Linie zwischen Auge 61 des Betrachters und der Mitte des virtuellen Bildes VB eingezeichnet. Deren Schnittpunkt mit der Schnittlinie der Windschutzscheibe 31 ist der Durchstoßpunkt DSP. Dies ist der Punkt auf der inneren Oberfläche der Windschutzscheibe 31, an dem die Blickrichtung B, die auch als Sichtlinie bezeichnet werden kann, diese Oberfläche durchstößt. Ändert der Betrachter seine Blickrichtung nach oben, beispielsweise entsprechend der oberen gestrichelten Linie B', so verschiebt sich der Durchstoßpunkt DSP nach oben, hier auf den oberen Durchstoßpunkt DSP'. Ändert der Betrachter seine Blickrichtung nach unten, beispielsweise entsprechend der unteren gestrichelten Linie B", so verschiebt sich der Durchstoßpunkt DSP nach unten, hier auf den unteren Durchstoßpunkt DSP". Diese Änderungen der Blickrichtung können sowohl direkt vom Betrachter hervorgerufen sein, beispielsweise durch Schwenken des Blicks, als auch durch das Fahrzeug, beispielsweise beim Bremsen oder Lenken.

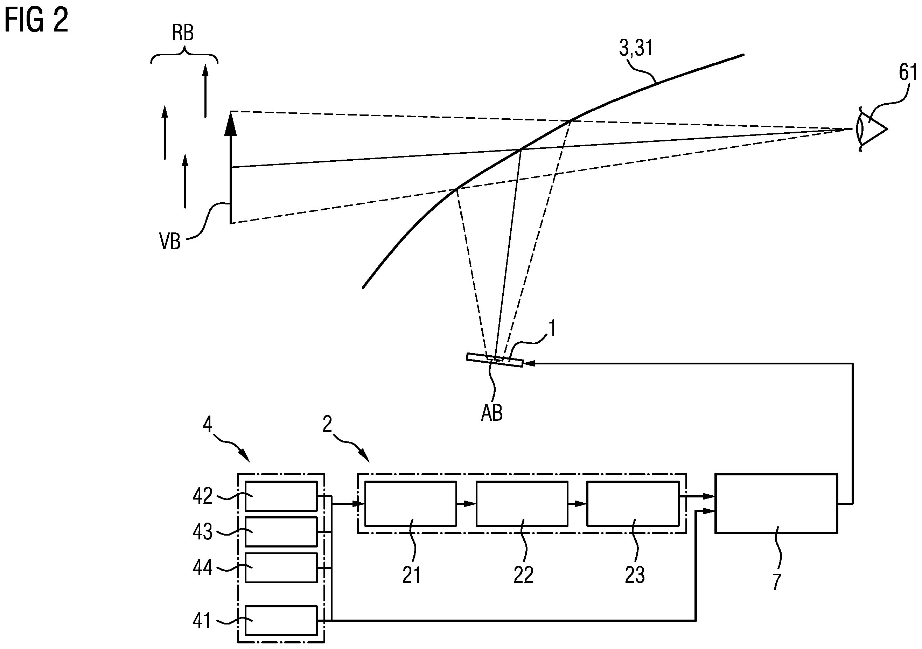

Fig.2 zeigt eine Variante eines erfindungsgemäßen Head-Up-Displays. Gleiche oder entsprechende Elemente wie zur vorhergehenden Abbildung sind mit gleichen Bezugszeichen versehen und werden hier nur insoweit erwähnt, als sie sich in Ausgestaltung oder Funktion von den vorhergehend beschriebenen unterscheiden oder eine erneute Erwähnung aus anderen Gründen sinnvoll erscheint. Dies gilt für die Beschreibung der folgenden Abbildungen entsprechend. Der untere und obere Teil der Fig.2 entspricht demjenigen zu Fig.1. Statt der Optikeinheit 5 ist hier eine Anzeigeeinheit 1 ohne einen aufwendigen optischen Pfad vorgesehen. Die Anzeigeeinheit 1 ist beispielsweise ein Tablet oder ein Smartphone mit ausreichender Bildschirmdiagonale oder ein anderes geeignetes Anzeigeelement, welches sich in der Windschutzscheibe 31 spiegelt und somit ein virtuelles Bild VB für das Auge 61 des Betrachters erzeugt. Das Tablet oder Smartphone kann beispielsweise auf der Instrumententafelabdeckung aufgelegt und arretiert sein. Das Ausgangssignal der Korrektureinheit 7 wird entweder drahtgebunden oder drahtlos zur Anzeigeeinheit 1 weitergeleitet. Bei drahtloser Übertragung bieten sich kurzreichweitige Funkverbindungen wie WLAN oder Bluetooth an. Gemäß einer Variante der Erfindung sind die Korrektureinheit 7 und der Bildgenerator 2 oder Teile des Bildgenerators 2 in die Anzeigeeinheit 1 integriert. Dies erfolgt vorzugsweise mittels eines Computerprogrammprodukts, beispielsweise einer sogenannten App, die entsprechende Softwarecodeabschnitte aufweist. Eine gemischte Realisierung aus Softwarecodeabschnitte, die einen Teil der erforderlichen Funktionen ausführen, und Hardwareelementen, die einen anderen Teil ausführen, ist hier ebenfalls möglich. Bei einem solchen hybriden System wird beispielsweise der Grafikprozessor eines Tablets oder Smartphones für bestimmte Grafikverarbeitungsaufgaben genutzt, während andere Aufgaben mittels einer App ausgeführt werden. Das Display des Tablets oder Smartphones dient dann als Bilderzeugungseinheit der Anzeigeeinheit 1. Das Computerprogrammprodukt kann dabei leitungsgebunden oder drahtlos auf das Tablet oder Smartphone aufgespielt werden, oder auch direkt auf einem nichtflüchtigen Speichermedium, beispielsweise einem Halbleiterspeicherelement, einer Speicherkarte oder SIM-Karte, dem Tablet oder Smartphone zugeführt werden. Als nichtflüchtiges Speichermedium kommt auch ein magnetisches, optisches oder anderes Speichermedium infrage, welches dem Tablet oder Smartphone direkt oder über ein mit diesem verbundenes Lesegerät zugeführt wird.

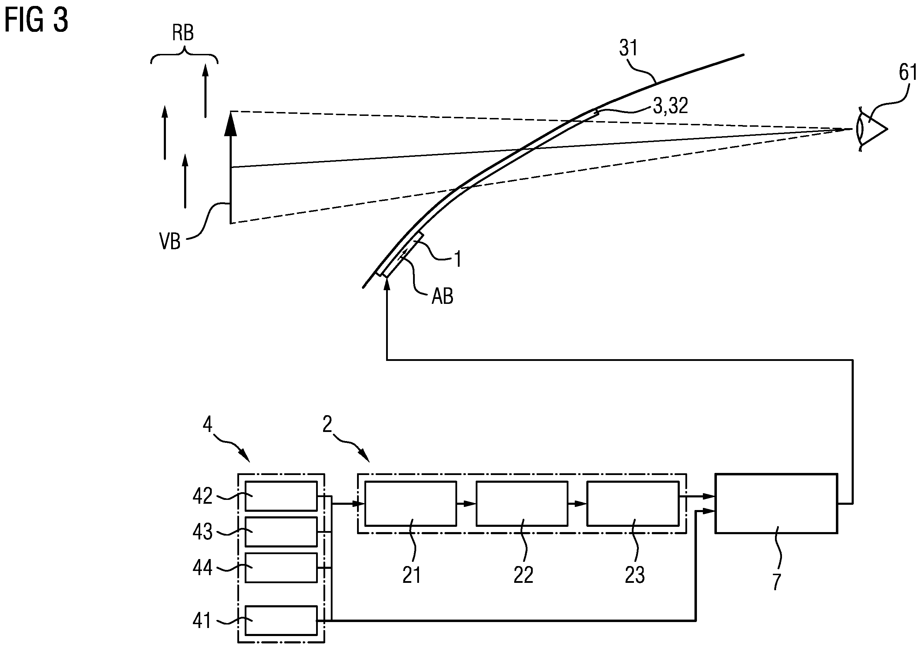

Fig.3 zeigt eine weitere Variante eines erfindungsgemäßen Head-Up-Displays. Ähnlich wie zu Fig.2 ist auch hier keine Optikeinheit 5 vorgesehen. Die Spiegeleinheit 3 wird hier durch ein Lichtleiterelement 32 gebildet. Das Lichtleiterelement 32 ist im Ausführungsbeispiel direkt auf der Windschutzscheibe 31 angebracht. Eine alternative Ausführungsform sieht vor, daß das Lichtleiterelement 32 als separates Bauteil zwischen Windschutzscheibe 31 und Auge 61, nahe der Windschutzscheibe 32 angeordnet ist. Im unteren Bereich des Lichtleiterelements 32 ist die Anzeigeeinheit 1 angeordnet. Das Lichtleiterelement 32 ist beispielsweise ein holographischer Lichtleiter, auch als "Smart Glass" bezeichnet. Im der Anzeigeeinheit 1 benachbarten Teil des Lichtleiterelements 32 sind Hologramme bzw. Gitterstrukturen angeordnet, die das von der Anzeigeeinheit 1 kommende Licht in den Lichtleiter einkoppeln. Im darauf angrenzenden Bereich sind vorzugsweise holographische Strukturen oder Gitterstrukturen angeordnet, die zu einer Vergrößerung des durch das Lichtleiterelement 32 propagierenden Lichts beitragen. Im oberen Bereich des Lichtleiterelements 32 befinden sich weitere holographische Strukturen oder Gitterstrukturen, mittels denen das im Lichtleiter propagierende Licht ausgekoppelt und Richtung Auge 61 des Betrachters geleitet wird. Dieses Auskoppeln kann mit einer Vielzahl hintereinander angeordneter teildurchlässiger Spiegel verglichen werden. Das Lichtleiterelement 32 übernimmt somit die Funktion eines Spiegelelements 3. Der Aufbau eines entsprechenden Lichtleiterelements 32 ist dem Fachmann bekannt und wird daher hier nicht weiter beschrieben.

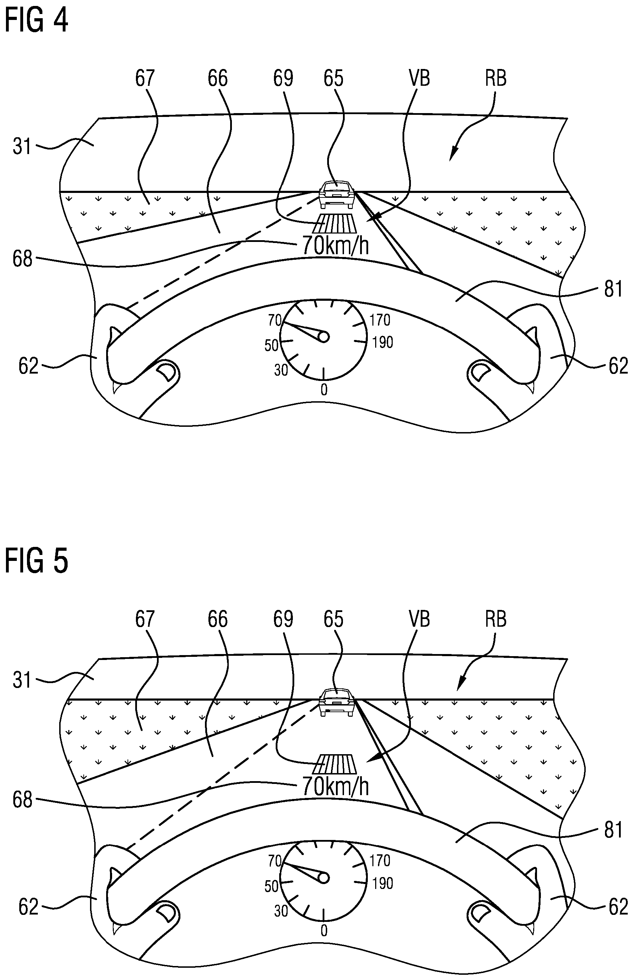

Die Fig.4-6 zeigen einen Blick durch die Windschutzscheibe 31 aus Sicht des Fahrers in unterschiedlichen Situationen. In Fig.4 erkennt man ein Lenkrad 81, das von den Händen 62 des Fahrers gehalten wird. Unterhalb des Lenkradkranzes erkennt man eine Geschwindigkeitsanzeige 82. Durch die Windschutzscheibe 31 erkennt man das reale Bild RB bestehend aus einem vorausfahrenden Kraftfahrzeug 65, einer Straße 66 und der Landschaft 67. Als virtuelles Bild VB sind eine Geschwindigkeitsanzeige 68 und ein Sicherheitsabstandsindikator 69 dargestellt. Der Sicherheitsabstandsindikator 69 zeigt dem Fahrer an, welchen Bereich hinter dem vorausfahrenden Fahrzeug 65 er als Sicherheitsabstand freihalten sollte. Der Sicherheitsabstandsindikator 69 ist ein Beispiel für eine Zusatzinformation gemäß Augmented Reality, die korrekt positioniert hinter dem vorausfahrenden Fahrzeug 65 angeordnet ist. Der Sicherheitsabstandsindikator 69 wird von der Datenverarbeitungseinheit 21 und der Zeicheneinheit 22 fortlaufend an die sich im Lauf der Zeit verändernde Position des vorausfahrenden Kraftfahrzeugs 65 angepaßt. Auch die Längenausdehnung des Sicherheitsabstandsindikators 69 verändert sich mit sich ändernder Geschwindigkeit des Fahrzeugs.

Fig.5 zeigt dieselbe Ansicht wie Fig.4 mit dem Unterschied, daß aufgrund eines kräftigen Bremsmanövers eine Nickbewegung nach vorne erfolgt ist, wodurch das reale Bild RB auf der Windschutzscheibe 31 gegenüber dem virtuellen Bild VB nach oben verschoben ist. Die Latenz des Bildgenerators 2 ist aufgrund der komplexen Datenverarbeitung so groß, daß es eine gewisse Zeit dauert, bis sich die Richtung der Nickbewegung umkehrt und letztendlich wieder ein stabiler Fahrzustand erreicht wird. Die in Fig.5 dargestellte Situation ist für den Nutzer, den Fahrer des Kraftfahrzeugs, irritierend, da sich der Sicherheitsabstandsindikator 69 nichtmehr an der korrekten Position direkt hinter dem vorausfahrenden Kraftfahrzeug 65 befindet, sondern viel zu nahe am eigenen Fahrzeug. Dies führt im Allgemeinen zu einer Irritation des Fahrers, deren Eintreten auch dadurch erhöht ist, daß das heftige Bremsmanöver üblicherweise ebenfalls von einem die Aufmerksamkeit des Fahrers beanspruchenden Ereignis herrührt.

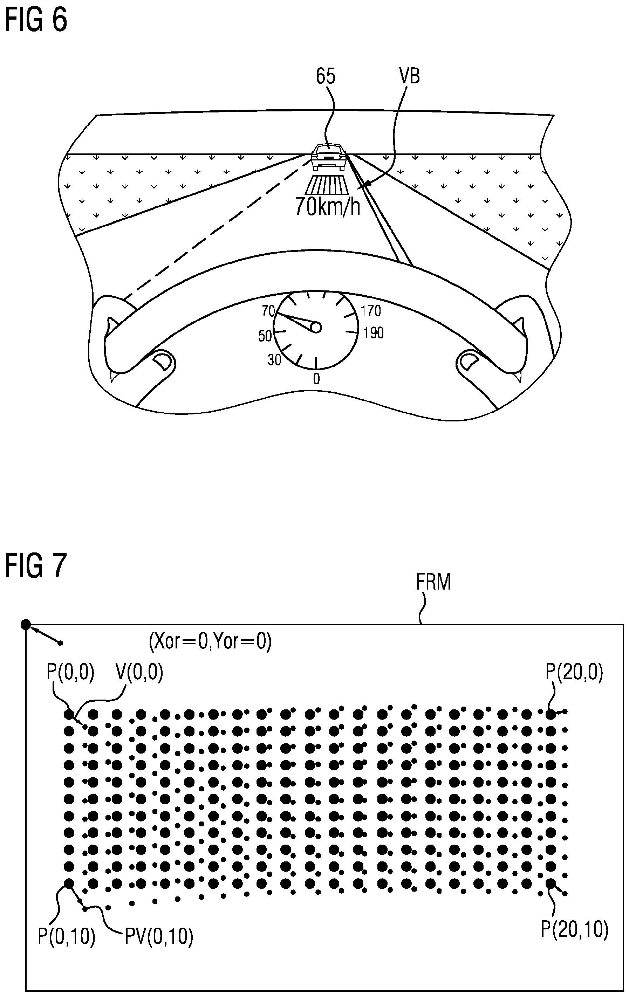

Erfindungsgemäß wird daher, wie in Fig.6 gezeigt, das anzuzeigenden Bild AB mit einem Offset versehen, sodaß das virtuelle Bild VB wieder an der korrekten Position hinter dem vorausfahrenden Kraftfahrzeug 65 erscheint.

Fig.7 zeigt ein Beispiel einer Bildverzerrung. Dargestellt ist ein Bildrahmen FRM, auch Frame genannt, dessen Ursprung (Xor=0,Yor=0) in der linken oberen Ecke liegt. Die darzustellenden Bildpunkte P(n,m) mit n=0,...,20 und m=0,...,10 sind als fette schwarze Punkte eines regelmäßigen Gitters angeordnet. Die nach der Verzerrung durch den Bildverzerrer 23 verschobenen Bildpunkte PV(n,m) sind als kleine Punkte dargestellt. Sie werden aus den Bildpunkten P(n,m) durch Verschiebung um die Vektoren V(n,m) berechnet. Die Vektoren V(n,m) bilden eine Warping-Matrix. Man erkennt, daß die Verschiebungsvektoren V(n,m) unterschiedliche Richtungen und Beträge aufweisen. Dies ist der Tatsache geschuldet, daß die Spiegeleinheit 3 eine uneinheitliche Wölbung aufweist, die durch die Verzerrung mittels der Warping-Matrix kompensiert wird. Die Pixel sind dann im Ursprungsbild innerhalb der achsenparallelen Rechtecke, die Zielpixel befinden sich in einem sogenannten Quad (Viereck), welches durch die jeweilige Warping Matrix (oder auch Verschiebevektoren) bestimmt ist und deren Stützstellen durch die kleineren Punkte dargestellt werden.

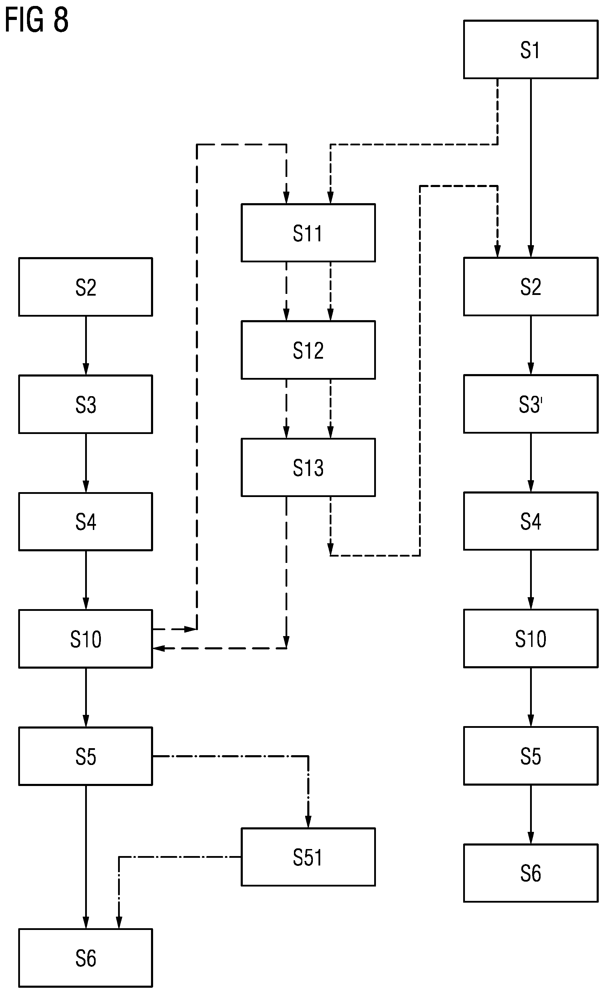

Fig.8 zeigt ein Flußdiagramm eines erfindungsgemäßen Verfahrens in zwei Hauptvarianten. Auf der linken Seite ist eine erste Hauptvariante mittels durchgezogener Pfeile dargestellt. Sie weist folgendes auf: Generieren S2 des auf dem Head-Up-Display darzustellenden Bildinhalts. Dies erfolgt beispielsweise in der Datenverarbeitungseinheit 21 und/oder der Zeicheneinheit 22 der Ausführungsbeispiele der Fig.1-3. Im folgenden wird weiterhin auch auf diese Abbildungen Bezug genommen. Alternative Varianten in Hardware, Software oder einer Kombination aus Hardware und Software liegen ebenfalls im Rahmen der Erfindung.

Es folgt ein Vorverzerren S3 des Bildinhalts entsprechend optischer Randbedingungen des Head-Up-Displays und Generieren S4 eines Anzeigesignals aus dem vorverzerrten Bildsignal. Dies findet beispielsweise im Bildverzerrer 23 statt.

Es folgt ein Detektieren S10 einer schnellen Positionsveränderung des Durchstoßpunktes DSP der Blickrichtung B eines Nutzers mit einer Fläche einer Spiegeleinheit des Head-Up-Displays. Dies findet beispielsweise im Zusammenwirken von Gyrosensor 41 und Korrektureinheit 7 statt. Ein Beaufschlagen S5 des Anzeigesignals mit einem der detektierten schnellen Positionsveränderung entsprechenden Offset findet beispielsweise in der Korrektureinheit 7 statt. Anschließend erfolgt ein Darstellen S6 des mit dem Offset beaufschlagten Anzeigesignals, beispielsweise auf der Anzeigeeinheit 1.

Auf der rechten Seite ist eine zweite Hauptvariante eines erfindungsgemäßen Verfahrens mittels durchgezogener Pfeile dargestellt. Sie weist folgendes auf: Detektieren S1 einer Positionsveränderung des Durchstoßpunktes DSP der Blickrichtung eines Nutzers mit einer Fläche einer Spiegeleinheit 3,31,32 des Head-Up-Displays. Dies findet beispielsweise im Zusammenwirken von Gyrosensor 41 und Korrektureinheit 7 statt. Es folgt das Generieren S2 des auf dem Head-Up-Display darzustellenden Bildinhalts. Dies erfolgt beispielsweise in der Datenverarbeitungseinheit 21 und/oder der Zeicheneinheit 22.

Es folgt ein Vorverzerren S3' des Bildinhalts entsprechend optischer Randbedingungen des Head-Up-Displays und zusätzlich entsprechend einem niederfrequenten Anteil der Positionsveränderung. Aus dem vorverzerrten Bildsignal wird ein Anzeigesignal generiert S4. Das Generieren S4 und das Vorverzerren S3' finden beispielsweise im Bildverzerrer 23 statt. Detektieren S10, Beaufschlagen S5 und Darstellen S6 erfolgen wie in der links dargestellten Hauptvariante.

Gemäß weiterer Varianten, die unterschiedlich gestrichelt in der Mitte dargestellt sind, erfolgt ein Detektieren S11 der schnellen Positionsänderung mittels eines Gyrosensors 41 und/oder ein Detektieren S12 der schnellen Positionsänderung mittels eines Signals eines Augenbewegungssensors. Der Augenbewegungssensor ist beispielsweise eine auf den Fahrer gerichtete Kamera 42. Werden beide Detektionen S11, S12 ausgeführt, so kann sich gemäß einer Variante ein Filtern S13 der schnellen Positionsänderung mittels des Signals des Augenbewegungssensors anschließen.

Gemäß einer weiteren Variante erfolgt ein Reduzieren S51 des Offsets entsprechend einer Zeitkonstante. Obwohl dies strichpunktiert nur zur linken Hauptvariante gezeigt ist, ist dies ebenfalls sinnvoll zusammen mit der rechts dargestellten Hauptvariante kombinierbar.

Erfindungsgemäß wird der Ablauf hinsichtlich der Latenzen bis zur Bildausgabe signifikant optimiert. Hierzu wird die Möglichkeit des Videoausgangs genutzt, das auszugeben Bild horizontal und/oder vertikal zu verschieben. Die optimierte Ablaufkette sieht dann wie folgt aus: Zunächst erfolgt eine Datenverarbeitung mit Bestimmung neuer Bildparameter. Dann wird ein Offset für den Videoausgang in x- und/oder y-Richtung erzeugt. Anschließend wird das resultierende Bild auf dem Videoausgang ausgegeben. Da zu erwarten ist, daß die erforderlichen Korrekturen für den Ausgleich von Nickbewegungen klein im Vergleich zur gesamten Projektionsfläche sind, kann der Fehler durch das Weglassen der Warping-Korrektur vernachlässigt werden. Im folgenden sind noch einige weitere Gestaltungsmöglichkeiten angegeben, weitere Varianten sind ebenfalls im Rahmen der Erfindung möglich. Gemäß einer Variante wird die gesamte Korrekturlogik zusammen mit der Sensorik, beispielsweise dem Gyrosensor 41, in einen separaten Hardwarebaustein integriert oder in ein höherintegriertes Systemon-Chip. Gemäß einer anderen Variante erfolgt die Integration des Warping-Schrittes in den Videoausgang zur Steigerung der Qualität. Gemäß einer anderen Variante ist eine Verschiebung der Ausgabe über eine Adaption des Display-Timings, der Schwarzschulter, vorgesehen. Hierbei ist allerdings nur eine Verschiebung um eine ganzzahlige Auflösung möglich. Eine andere Variante besteht darin, in manchen Funktionspfaden zur Ansteuerung von Displays einen separaten Timing-Controller zwischen Grafikprozessor und Display zu verwenden, welcher programmierbar ist und auch zur Umsetzung eines Offsets der Bildausgabe genutzt werden kann. Statt die Displayausgabe umzurechnen erfolgt gemäß einer weiteren Variante auch eine Verschiebung der Ausgabeeinheit über einen mechanischen Aktuator, beispielsweise Piezoelemente. Gemäß einer weiteren Variante erfolgt die Messung und Bestimmung des Offsets in einer separaten Steuereinheit. In diesem Fall können alle bereits genannten Varianten zur Abbildung des Offsets unverändert eingesetzt werden.

Die Idee der Erfindung basiert auf einer logischen Korrektureinheit, die physikalisch an unterschiedlichen Stellen zu liegen kommen kann. Erfindungsgemäß ist sie als separate Korrektureinheit 7 angeordnet oder in die Zeicheneinheit 22, den Bildverzerrer 23, die Anzeigeeinheit 1, oder eine Ansteuerung des beweglichen Spiegels 52 integriert. Auch andere Anordnungen liegen im Bereich der Erfindung. Wesentlich ist dabei, daß die Korrektur anschließend an die latenzbehaftete Datenverarbeitungseinheit 21 erfolgt und Signale einer Teilmenge der Sensoren 4,41-44 als Eingang benutzt, insbesondere derjenigen, die eine geringe Latenz aufweisen, wie beispielsweise der Gyrosensor 41.

## Patentansprüche

1. Head-Up-Display, aufweisend:
- eine Spiegeleinheit (3,31,32);
- eine Anzeigeeinheit (1);
- einen Bildgenerator (2);
- eine Korrektureinheit (7) zum Korrigieren einer Position eines anzuzeigenden Bildes;
- zumindest einen Sensor (4, 41, 44) geringer Latenz , dessen Ausgang mit dem Bildgenerator (2) und mit der Korrektureinheit (7) verbunden ist; wobei das Head-Up-Display eingerichtet ist, folgende Schritte auszuüben:
- Detektieren (S1), in einem Ausgangssignal des Sensors (4, 41, 44), eines niederfrequenten Anteils einer Positionsveränderung des Durchstoßpunktes (DSP) der Blickrichtung (B) eines Nutzers mit einer Fläche der Spiegeleinheit (3,31,32);
- Generieren (S2) des darzustellenden Bildinhalts;
- Vorverzerren (S3') des Bildinhalts entsprechend optischen Randbedingungen des Head-Up-Displays und dem detektierten niederfrequenten Anteil der Positionsveränderung;
- Generieren (S4) eines Anzeigesignals aus dem vorverzerrten Bildsignal;
- Detektieren (S10), in dem Ausgangssignal des Sensors (4, 41, 44), eines höherfrequenten Anteils einer Positionsveränderung des Durchstoßpunktes (DSP) der Blickrichtung (B) eines Nutzers mit einer Fläche der Spiegeleinheit (3,31,32); und
- Beaufschlagen (S5) des Bildinhalts und/oder des vorverzerrten Bildsignals und/oder des Anzeigesignals mit einem dem detektierten höherfrequenten Anteil einer Positionsveränderung entsprechenden Offset; und
- Darstellen (S6) des direkt oder indirekt mit dem Offset beaufschlagten Anzeigesignals.

2. Head-Up-Display nach Anspruch 1, **dadurch gekennzeichnet, daß** der zumindest eine Sensor ein Gyrosensor (41) ist, der mit einem Eingang der Korrektureinheit (7) verbunden ist.

3. Head-Up-Display nach einem der vorhergehenden Ansprüche, wobei der Bildgenerator (2) mehrere Elemente (21,22,23) unterschiedlicher Latenzzeit aufweist, und die Korrektureinheit (7) dem Element (21) höchster Latenzzeit nachgeordnet ist.

4. Verfahren zum Betreiben eines Head-Up-Display, aufweisend:
- Detektieren (S1), in einem Ausgangssignal eines Sensors (4, 41, 44) geringer Latenz, eines niederfrequenten Anteils einer Positionsveränderung des Durchstoßpunktes (DSP) der Blickrichtung (B) eines Nutzers mit einer Fläche einer Spiegeleinheit (3,31,32) des Head-Up-Displays;
- Generieren (S2) des auf dem Head-Up-Display darzustellenden Bildinhalts;
- Vorverzerren (S3') des Bildinhalts entsprechend optischen Randbedingungen des Head-Up-Displays und dem detektierten niederfrequenten Anteil der Positionsveränderung;
- Generieren (S4) eines Anzeigesignals aus dem vorverzerrten Bildsignal;
- Detektieren, in dem Ausgangssignal des Sensors (4,41-44), eines höherfrequenten Anteils einer Positionsveränderung des Durchstoßpunktes (DSP) der Blickrichtung (B) eines Nutzers mit einer Fläche der Spiegeleinheit (3,31,32) des Head-Up-Displays;
- Beaufschlagen (S5) des Bildinhalts und/oder des vorverzerrten Bildsignals und/oder des Anzeigesignals mit einem dem detektierten höherfrequenten Anteil einer Positionsveränderung entsprechenden Offset; und
- Darstellen (S6) des direkt oder indirekt mit dem Offset beaufschlagten Anzeigesignals.

5. Verfahren nach Anspruch 4, weiterhin aufweisend:
- Reduzieren (S51) des Offsets entsprechend einer Zeitkonstante.

6. Verfahren nach einem der Ansprüche 4, 5, weiterhin aufweisend:
- Detektieren (S11) des höherfrequenten Anteils der Positionsveränderung mittels eines Gyrosensors (41).

7. Verfahren nach einem der Ansprüche 4-6, weiterhin aufweisend:
- Detektieren (S12) des höherfrequenten Anteils der Positionsveränderung mittels eines Signals eines Augenbewegungssensors.

8. Verfahren nach Anspruch 7, weiterhin aufweisend:
- Filtern (S13) des höherfrequenten Anteils der Positionsveränderung mittels des Signals des Augenbewegungssensors, wobei mittels Auswertealgorithmen ermittelte Blicke eines Fahrers zu einem Rückspiegel, zu einem Außenspiegel, zu einem Autoradio, zu anderen Bedienelementen oder zu Mitfahrern als nichtrelevante Positionsveränderung herausgefiltert werden.

9. Computerprogramm umfassend Instruktionen, die bewirken, daß das Head-Up-Display nach Anspruch 1 das Verfahren gemäß einem der Ansprüche 4-8 ausführt.

10. Computerlesbares Speichermedium, auf dem das Computerprogramm nach Anspruch 9 gespeichert ist.

## Claims

1. A head-up display, having:
- a mirror unit (3, 31, 32);
- a display unit (1);
- an image generator (2);
- a correction unit (7) for correcting a position of an image to be displayed;
- at least one low-latency sensor (4, 41, 44), the output of which is connected to the image generator (2) and to the correction unit (7);
wherein the head-up display is configured to perform the following steps:
- detecting (S1), in an output signal of the sensor (4, 41, 44), a low-frequency portion of a change in position of the intersection point (DSP) of the line of vision (B) of a user with a surface of the mirror unit (3, 31, 32);
- generating (S2) the image content to be displayed;
- pre-warping (S3') the image content corresponding to optical boundary conditions of the head-up display and to the detected low-frequency portion of the change in position;
- generating (S4) a display signal from the pre-warped image signal;
- detecting (S10), in the output signal of the sensor (4, 41, 44), a higher-frequency portion of a change in position of the intersection point (DSP) of the line of vision (B) of a user with a surface of the mirror unit (3, 31, 32); and
- applying (S5) an offset corresponding to the detected higher-frequency portion of a change in position to the image content and/or to the pre-warped image signal and/or to the display signal; and
- displaying (S6) the display signal to which the offset has been directly or indirectly applied.

2. The head-up display as claimed in claim 1, **characterised in that** the at least one sensor is a gyro-sensor (41) that is connected to an input of the correction unit (7).

3. The head-up display as claimed in any one of the preceding claims, wherein the image generator (2) has multiple elements (21, 22, 23) with different latency times and the correction unit (7) follows the element (21) with the highest latency time.

4. A method for operating a head-up display, having:
- detecting (S1), in an output signal of a low-latency sensor (4, 41, 44), a low-frequency portion of a change in position of the intersection point (DSP) of the line of vision (B) of a user with a surface of a mirror unit (3, 31, 32) of the head-up display;
- generating (S2) the image content to be displayed on the head-up display;
- pre-warping (S3') the image content corresponding to optical boundary conditions of the head-up display and to the detected low-frequency portion of the change in position;
- generating (S4) a display signal from the pre-warped image signal;
- detecting, in the output signal of the sensor (4, 41-44), a higher-frequency portion of a change in position of the intersection point (DSP) of the line of vision (B) of a user with a surface of a mirror unit (3, 31, 32) of the head-up display;
- applying (S5) an offset corresponding to the detected higher-frequency portion of a change in position to the image content and/or to the pre-warped image signal and/or to the display signal; and
- displaying (S6) the display signal to which the offset has been directly or indirectly applied.

5. The method as claimed in claim 4, further having:
- reducing (S51) the offset according to a time constant.

6. The method as claimed in any one of claims 4, 5, further having:
- detecting (S11) the higher-frequency portion of the change in position by means of a gyro-sensor (41).

7. The method as claimed in any one of claims 4-6, further having:
- detecting (S12) the higher-frequency portion of the change in position by means of a signal of an eye movement sensor.

8. The method as claimed in claim 7, further having:
- filtering (S13) the higher-frequency portion of the change in position by means of the signal of the eye movement sensor, wherein glances of a driver at a rearview mirror, at an exterior mirror, at a car radio, at other operating elements or at passengers as determined by means of evaluation algorithms are filtered out as irrelevant changes in position.

9. A computer program, comprising instructions that cause the head-up display as claimed in claim 1 to execute the method as claimed in any one of claims 4-8.

10. A computer-readable storage medium on which the computer program as claimed in claim 9 is stored.

## Revendications

1. Affichage tête haute, comprenant :
- une unité miroir (3, 31, 32) ;
- une unité d'affichage (1) ;
- un générateur d'images (2) ;
- une unité de correction (7) destinée à corriger une position d'une image à afficher ;
- au moins un capteur (4, 41, 44) à faible latence, dont la sortie est reliée au générateur d'images (2) et à l'unité de correction (7) ;
dans lequel l'affichage tête haute est configuré pour exécuter les étapes suivantes :
- la détection (S1), dans un signal de sortie du capteur (4, 41, 44), d'une composante basse fréquence d'une variation de position du point d'intersection (DSP) de la direction du regard (B) d'un utilisateur avec une surface de l'unité miroir (3, 31, 32) ;
- la génération (S2) du contenu de l'image à afficher ;
- la pré-déformation (S3') du contenu de l'image en fonction des conditions optiques limites de l'affichage tête haute et de la composante basse fréquence détectée de la variation de position ;
- la génération (S4) d'un signal d'affichage à partir du signal d'image pré-déformé ;
- la détection (S10), dans un signal de sortie du capteur (4, 41, 44), d'une composante haute fréquence d'une variation de position du point d'intersection (DSP) de la direction du regard (B) d'un utilisateur avec une surface de l'unité miroir (3, 31, 32) ; et
- l'application (S5), au contenu de l'image et/ou au signal d'image pré-déformé et/ou au signal d'affichage, d'un décalage correspondant à la composante haute fréquence détectée d'une variation de position ; et
- l'affichage (S6) du signal d'affichage directement ou indirectement affecté par le décalage.

2. Affichage tête haute selon la revendication 1, **caractérisé en ce que** l'au moins un capteur est un capteur gyroscopique (41), lequel est relié à une entrée de l'unité de correction (7).

3. Affichage tête haute selon l'une quelconque des revendications précédentes, dans lequel le générateur d'images (2) présente plusieurs éléments (21, 22, 23) ayant des temps de latence différents, et l'unité de correction (7) est disposée en aval de l'élément (21) présentant le temps de latence le plus élevé.

4. Procédé de fonctionnement d'un affichage tête haute, comprenant :
- la détection (S1), dans un signal de sortie d'un capteur (4, 41, 44) à faible latence, d'une composante basse fréquence d'une variation de position du point d'intersection (DSP) de la direction du regard (B) d'un utilisateur avec une surface d'une unité miroir (3, 31, 32) de l'affichage tête haute ;
- la génération (S2) du contenu d'image à afficher sur l'affichage tête haute ;
- la pré-déformation (S3') du contenu de l'image en fonction des conditions optiques limites de l'affichage tête haute et de la composante basse fréquence détectée de la variation de position ;
- la génération (S4) d'un signal d'affichage à partir du signal d'image pré-déformé ;
- la détection, dans le signal de sortie du capteur (4, 41-44), d'une composante haute fréquence d'une variation de position du point d'intersection (DSP) de la direction du regard (B) d'un utilisateur avec une surface de l'unité miroir (3, 31, 32) de l'affichage tête haute ;
- l'application (S5), au contenu de l'image et/ou au signal d'image pré-déformé et/ou au signal d'affichage, d'un décalage correspondant à la composante haute fréquence détectée d'une variation de position ; et
- l'affichage (S6) du signal d'affichage directement ou indirectement affecté par le décalage.

5. Procédé selon la revendication 4, comprenant en outre :
- la réduction (S51) du décalage en fonction d'une constante de temps.

6. Procédé selon l'une quelconque des revendications 4 ou 5, comprenant en outre :
- la détection (S11) de la composante haute fréquence de la variation de position au moyen d'un capteur gyroscopique (41).

7. Procédé selon l'une quelconque des revendications 4 ou 6, comprenant en outre :
- la détection (S12) de la composante haute fréquence de la variation de position au moyen d'un signal provenant d'un capteur de mouvements oculaires.

8. Procédé selon la revendication 7, comprenant en outre :
- le filtrage (S13) de la composante haute fréquence de la variation de position au moyen du signal du capteur de mouvements oculaires, dans lequel les regards d'un conducteur vers un rétroviseur, un miroir extérieur, un autoradio, d'autres éléments de commande ou des passagers, déterminés au moyen d'algorithmes d'évaluation, sont éliminés en tant que variations de position non pertinentes.

9. Programme informatique comprenant des instructions qui amènent à ce que l'affichage tête haute selon la revendication 1 mette en œuvre le procédé selon l'une quelconque des revendications 4 à 8.

10. Support de stockage lisible par ordinateur, sur lequel est stocké le programme informatique selon la revendication 9.
